# EUROPEAN PATENT APPLICATION

(11) **EP 3 415 245 A1**
(43) Date of publication of application: **19.12.2018**
(21) Application number: 17425063.9
(22) Date of filing: 14.06.2017
(51) Int. Cl.: B09B 3/00, B09B 5/00, B29B 17/00, C08J 11/04

(54) **PROCESS FOR OBTAINING CONSTRUCTION BLOCKS SUITABLE TO BE USED IN ROAD, RURAL AND CIVIL CONSTRUCTION INDUSTRY OUT OF OVERSIZED RESIDUES**

(71) Applicant: Monaco, Giuseppe, 95024 Acireale (CT) (IT)
(72) Inventor: Correnti, Gabriele Federico, 95129 Catania (Ct) (IT); Monaco, Giuseppe, 95024 Acireale (Ct) (IT)

(57) **Abstract**

Oversize screener residuos recovery process, allows the production construction blocks suitable to be used in civil, rural and road construction industry.

The buildings blocks consist of a matrix of "oversize screener residuos" chemically stabilized by means of a basic environment inerting process and made solid by a strong volumetric reduction and the subsequent reinforcement with steel or other high-strength materials cables;

The building blocks may be superimposed each other and arranged with texture conforming to a solid wall structure, with application in the field of civil, rural and road costruction industry for the realization of structures such as fences, lake riverbank protection barriers, wind barriers, load-bearing wall, etc..

In case of overground applications, with the aim of protection against U.V. and for aesthetic reasons, each building blocks can be coated with HDPE or high resistance polyethylene film.

## Description

### PRIOR STATE OF THE TECHNIQUE

International policies on municipal solid waste (MSW) management are becoming increasingly urgent due to environmental issues and resource depletion. The disposal of MSW through landfill or waste-to-energy plants is not to be considered as a long-term solution due to the saturation of authorized landfill sites and the high environmental impact of waste-to-energy plants on the other side.

This situation has increasingly made urgent the search of alternative solutions for MSW treatment.

The identification of such alternative solutions is greatly slowed down by the needs of finding environmentally sustainable and law complying choises.

The preventive treatment of MSW through MBT (Mechanical Biological Treatment) although can be considered as an environmentally sustainable solution based essentially on "cold" mechanical and biological processes, however, it has "oversize screener residual scraps" whose ultimate destination, in the actual state of the art, is still landfills or waste-to-energy plants with the consequent negative impacts described above.

It is in this context that the present invention is intended to identify an alternative solution for the management of such oversize screener residuos.

From a research carried out on similar inventions, it has been found a British patent GB2388115 (A) - 2003-11-05 which refers to building blocks made up of an elastomeric material matrix core (essentially composed of scraps tires) and a concrete shell.

This invention is not comparable to what is proposed in,the present description since a standard construction material, such as concrete, is required to create those blocks in order to provide them the suitable characteristics to be used as a construction material.

### GOAL ACHIEVED BY THE INNOVATION

The goals that the innovation will achieve can be summarized as follows:
- Recovery, by means of inerting and compacting processes, of MBT "oversize screener residual scraps" with the aim of producing building block elements intended to be used in rural, civil and road construction industry;
- Reduction of the amount of waste to be sent to landfill or waste-to-energy plants;
- Reduction of environmental impacts and resource consumption.
- Production of high compression strength building blocks with the possibility of overlapping them for the realization of monolithic structures.

### BRIEF DESCRIPTION OF THE DRAWINGS:

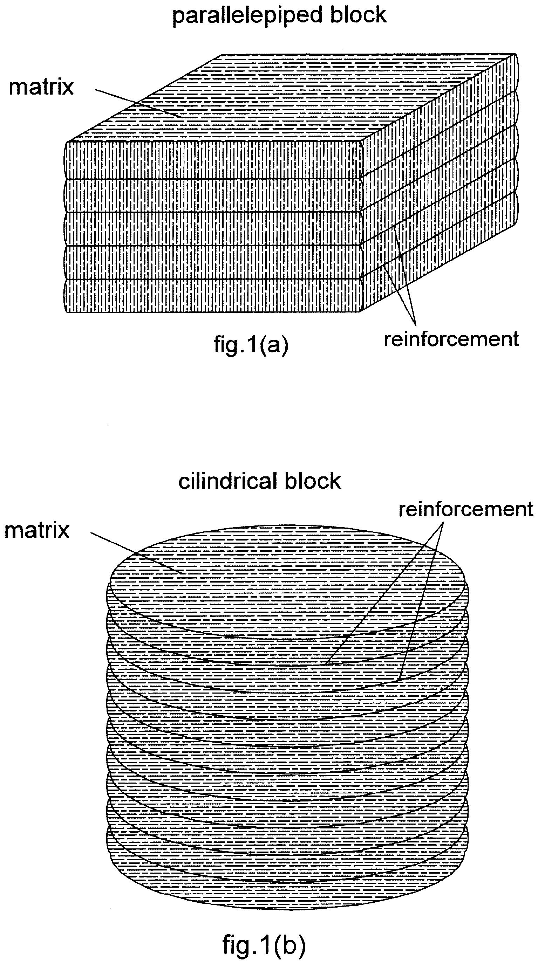

The process of recovering the oversize screener residual scraps coming from an MTB plants (hereinafter simply referred as "oversize screener residuos"), allows the production of civil, road and rural buildings blocks of cylindrical or parallelepiped shape, depending on the type of compaction press used. (Fig 1(a) and 1(b)).

These building blocks consist of a matrix core resulting from the oversize screener residuos recovering process, essentially consisting of plastic compounds, in the form of LDPE, HDPE, and PET, and limited of synthetic materials (Fig 1(a) and 1(b)). The matrix constituting these building blocks is made solid by the strong volumetric reduction and the subsequent reinforcement with steel or other high-strength materials cables. (Fig 1(a) and 1(b))

The process of oversize screener residuos recovery is a step-by-step process that involves several stages such as:
- a preliminary inerting of the residuos itself, capable of triggering reactions that can favor the contaminants chemical stabilization by the formation of hydroxides and insoluble salts, obtained by doping calcium hydroxide or calcium carbonate up to 5% by weight maintaining the PH 12 for at least 2 hours;
- a strong volumetric reduction by means of linear or rotary presses capable of providing the material with the shape and compression strenght required;
- the blocks reinforcement with steel or other high-strength material wires in order to prevent the material from returning to its primordial shape;
- a geo-membrane or polyethylene coating protection film in case of overground applications.

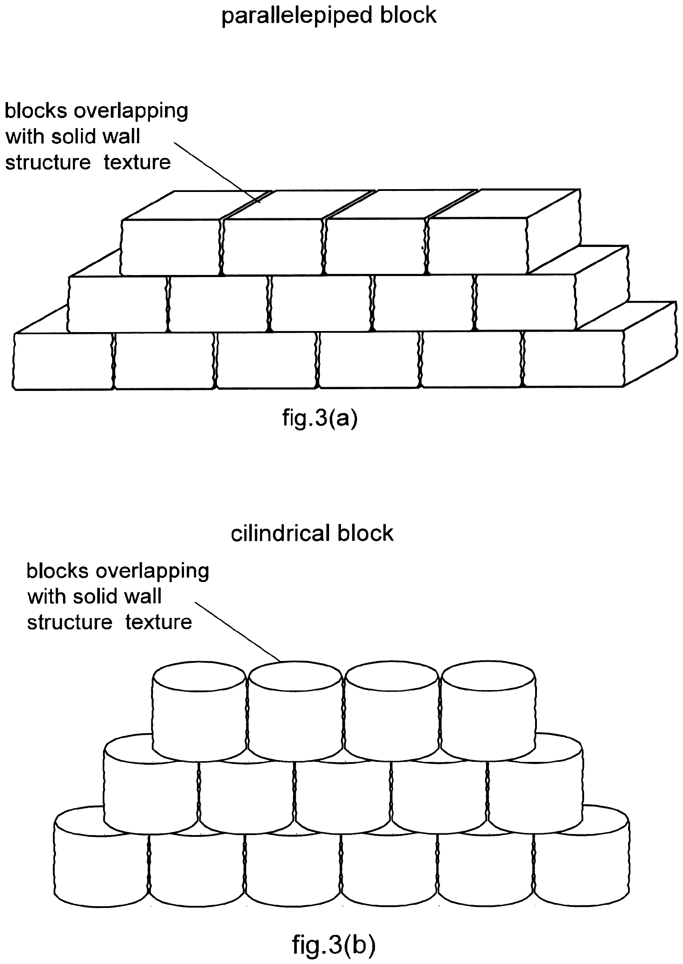

The building blocks can be superimposed each other and arranged with texture conforming to a solid wall structure (Fig 3(a) and 3(b)).

Possible applications of such building blocks range in the field of civil, rural, and road construction industry for the realization of structures such as fences; lake riverbank protection barriers; wind barriers; load-bearing wall, etc.

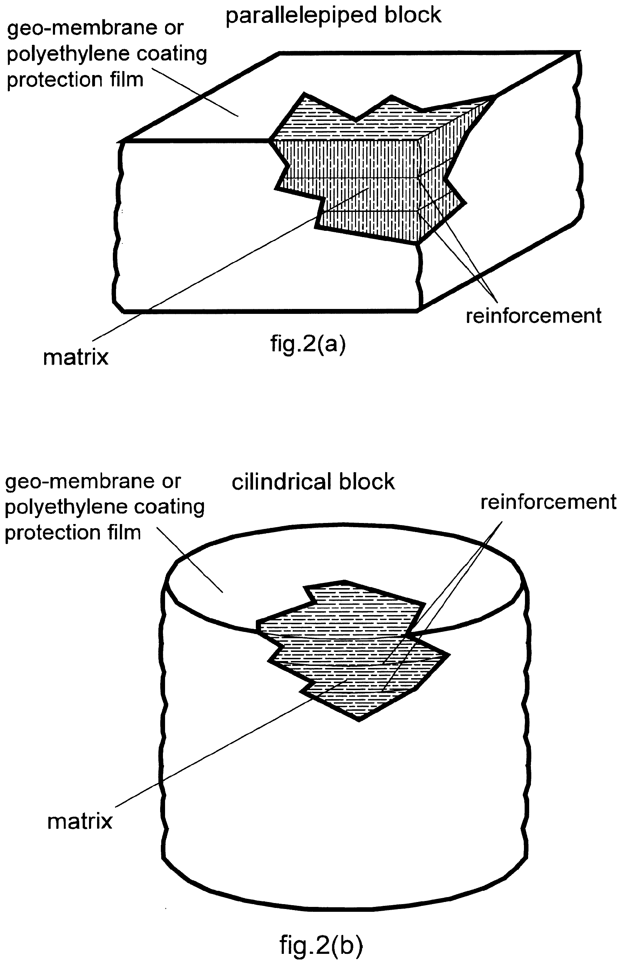

In case of overground applications, with the aim of protection against U.V. and for aesthetic reasons, each building blocks can be coated with HDPE or high resistance polyethylene film (Fig. 2(a) and 2(b)),

### ANALYSIS OF RESULTS

The process of recovering over-screening residuos downstream of the MBT of waste, allows the manufacture of civil, road and rural buildings blocks of cylindrical or parallelepiped shape.

The particular recovery process, which also includes a basic environment inerting treatment, allows these oversize screener residuos to be removed from traditional disposal solutions such as landfill or waste to energy plants.

The manufactured building blocks can therefore be used as building products with various applications in the areas of rural, civil and road construction industry.

The blocks are superimposable for the purpose of making monolithic structures with a solid wall texture.

## Claims

1. Oversize screener residuos recovery process allows the production of civil, road and rural buildings blocks of cylindrical or parallelepiped shape, depending on the type of compaction press used.

2. In accordance with claim no. 1, such buildings blocks consist of a matrix of "oversize screener residuos" chemically stabilized by means of a basic environment inerting process which makes the same blocks suitable to respect the groundwater table limits following a transfer test.

3. In accordance with claim no. 2 the matrix, thanks to a strong volumetric reduction process and subsequent reinforcement with steel or other high strength materials cables, is able to maintain the shape and guarantee high compression strenght compatible with the intended uses;

4. According to the previous claims, the building blocks may be superimposed each other and arranged with texture conforming to a solid wall structure, in order to build civil and rural structures such as fences, lake riverbank protection barriers, wind barriers, load-bearing wall, etc.
